Europäisches Patentamt

European Patent Office (11) Publication number: **0 051 574**

Office européen des brevets **B1**

(12) **EUROPEAN PATENT SPECIFICATION**

(45) Date of publication of patent specification: **02.01.85**    (51) Int. Cl.⁴: **G 12 B 5/00, F 16 M 11/04, G 02 B 7/00, F 41 G 11/00**

(21) Application number: **81850200.7**

(22) Date of filing: **29.10.81**

(54) **Arrangement for adjustably mounting an optical direction indicator.**

(30) Priority: **31.10.80 SE 8007676**

(43) Date of publication of application:
**12.05.82 Bulletin 82/19**

(45) Publication of the grant of the patent:
**02.01.85 Bulletin 85/01**

(84) Designated Contracting States:
**BE CH DE FR GB IT LI NL**

(56) References cited:
**DE-A-1 938 582**
**FR-A-1 580 122**
**FR-A-2 293 857**
**GB-A- 545 748**
**GB-A- 927 012**
**US-A-3 168 273**
**US-A-3 931 947**
**US-A-3 974 994**
**US-A-4 027 841**

(73) Proprietor: **TELEFONAKTIEBOLAGET L M ERICSSON**
**S-126 25 Stockholm (SE)**

(72) Inventor: **Renander, Ake Carl**
**Näckrosstigen 13**
**S-430 80 Hovas (SE)**
Inventor: **Samuelsson, Rune Paul**
**PI 329 Albanusbacken**
**S-424 38 Angered (SE)**

(74) Representative: **Biriell, Gustav**
**Telefonaktiebolaget L M Ericsson**
**S-126 25 Stockholm (SE)**

Courier Press, Leamington Spa, England.

## Description

The invention described herein relates to an arrangement for adjustably mounting an optical direction indicator in accordance with the preamble of the following main claim.

An adjustable mounting is disclosed in the Swedish Patent Specification No. 7316044—2, e.g. for an optical direction indicator in the form of a photocell. The mounting disclosed is, however, too large and does not permit aiming with sufficient precision for use in the direction indicator of the type of the present invention.

The invention is primarily intended for application to a direction indicating telescope in an armoured vehicle or tank. The telescope must be adjustable to enable bore sighting, which entails setting parallel to the tank gun. Since there is only a small opening, possibly provided with a periscope, made in the tank wall for the telescope line of sight, is a requirement that the telescope is moved only a minor amount laterally and in altitude when its line of sight is altered during setting. It also occurs that parts of the telescope are exchanged for spares and that these are once again put in place; the means for aiming must therefore be graduated and allow adjustment with such precision that a previously tested setting can be reproduced without renewed testing. The means for mounting and setting the telescope must also be able to withstand heavy shocks.

The solution in accordance with the invention is characterized as is set forth in the characterizing portion of the following claims.

With this solution an arrangement for mounting and setting the optical direction indicator is produced, which meets the demands made on it, the arrangement only taking up a small part of the limited space in the tank.

An example of an arrangement in accordance with the invention will now be explained with reference to the appended drawings, in which:

Figure 1 is a perspective view of an optical direction indicator and its mounting,

Figure 2 illustrates a first attachment point in the mounting,

Figure 3 illustrates a second attachment point in the mounting and

Figure 4 illustrates a third attachment point in the mounting.

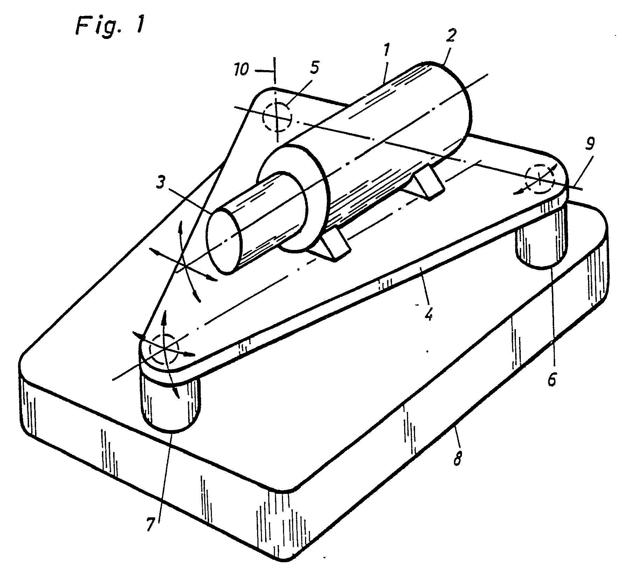

In the example of an arrangement in accordance with the invention herein described, there is shown in Figure 1 an optical direction indicator in the form of an aiming telescope 1 with its object lens at 2 and its eyepiece at 3 and rigidly attached to a base 4 in the form of a plate. The base 4 is connected at three attachment points 5, 6 and 7 to a substructure which is indirectly connected to the tank gun and is movable in the same way as the gun. The substructure is schematically illustrated as a foundation plate 8, and is otherwise not regarded as requiring any description in this connection.

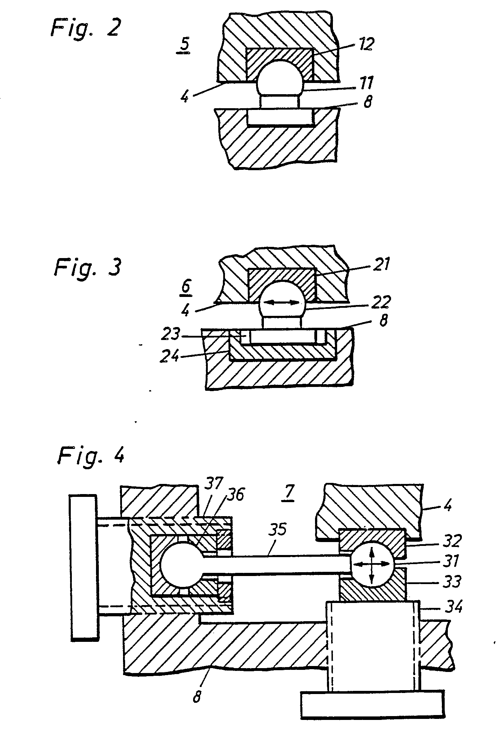

As is shown in detail in Figure 2, the first attachment point 5 comprises a male ball joint half 11 rigidly attached to the substructure 8, with a female portion 12 pressed into the base 4 and resting against the ball 11. The attachment point is thus formed to allow the base 4, and thereby the sighting telescope 1, to be moved without hindrance in all directions about the centre of the ball 11.

In the second attachment point 6, illustrated in Figure 3, the ball joint comprises a female half 21 pressed into the base 4 and resting against a male ball half 22. The ball half 22 in turn rests in a flat bottomed recess 23 in an insert 24 in the substructure 8. The recess 23 permits a small lateral movement of the ball.

Both attachment points 5 and 6 are at the same level. When the base 4 is turned round the attachment point 5, the ball half 22 will be moved in an arc in the plane of the base and with its centre coinciding with the pivoting centre of the first attachment point 5.

As will be seen from Figure 4, the third attachment point 7 also includes a ball 31 engaging against an overlying complementally formed piece 32 pressed into the base 4 and an underlying complementally formed piece 33 resting against a first setting means 34, here in the form of an adjustment screw 34 with its end cut off square, and which is screwed into a threaded hole through the substructure 8 at right-angles to the base 4. Rotating the screw provides movement at right-angles to the plane of the base 4 for the base and the telescope 1, this movement resulting in pivoting about an axis 9 through the centres of the ball joints in the first and second attachment points 5 and 6, see Figure 1, and gives the sighting telescope 1 its elevation setting.

Springs, not shown on the drawing, are arranged for pressing the base 4 against the balls 11, 22, 31 and still allow movement of the base in plan, as well as at right angles thereto via the adjusting screw 34.

As will be seen in Figure 4, the ball 31 at the third attachment point 7 is rigidly connected to a second ball 36 via a member 35, said ball 36 being movably clamped in a second setting means 37, here in the form of a second adjustment screw 37, which is screwed into a threaded hole through the substructure 8, substantially parallel to the axis 9 of the attachment points 5 and 6. Rotation of the second adjustment screw moves the ball 31 in the direction of the screw, giving the base 4 and telescope 1 a movement in the plane of the base, which is a pivoting movement about the axis 10 of the attachment point 5, the axis 10 being perpendicular to the plane of the base 4. Pivoting caused by the second setting means 37 provides the telescope 1 with its lateral angle setting.

Setting the sighting telescope 1 in the intended direction is always possible, there being no demand for the axis of the telescope to be at right angles to the axis 9 through both attachment points 5 and 6 or to be parallel to the plane of the base 4. The setting is possible as long as the direction of the telescope axis deviates from the directions of the axis 9 and 10. Both adjustment screws 34, 37 are provided with graduations not shown on the drawing. These graduations enable setting the telescope 1 with such precision that the error attains to at most 0,1 milliradian. The setting range for the telescope is 20 milliradians in latitude and in elevation.

In the example described, the distance from the axis of the telescope 1 to the first pivoting axis 9 of the mounting is only 37 mm and to the second pivoting axis 10 thereof only 20 mm, whereby both distances are less than the telescope diameter, which is about 40 mm. The telescope axis is thus only moved a minor amount during setting, so that sighting is always possible in spite of the opening for the telescope in the tank wall only being very small.

The arrangement also meets the demand of only taking up a small amount of the limited space in the tank. It is also highly resistant to shocks.

## Claims

1. Arrangement for adjustably mounting an optical direction indicator such as a sighting telescope (1) with associated base (4) on a substructure (8) provided with three attachment points (5, 6, 7), adjustable for giving the direction indicator a prescribed direction in relation to the substructure, characterized in that

the first attachment point (5) comprises a ball means (11) allowing universal movement of the base (4) about the attachment point (5),

the second attachment point (6) comprises a ball means (22) adapted for movement in an arc with its centre at the first attachment point (5) and with the arc approximately in a plane through the three attachment points (5, 6, 7),

the third attachment point (7) comprises a ball means (31) displaceable by a first setting means (34) substantially at right angles to the plane through the three attachment points (5, 6, 7) for pivoting the base (4) and the direction indicator (1) about an axis (9) through the first and second attachment points (5, 6), and also by a second setting means (37) for displacing said ball means (31) in an arc with its centre at the first attachment point (5) and with the arc approximately in the plane through the three attachment points (5, 6, 7) for pivoting the base (4) and the direction indicator (1) about an axis (10) through the fixed ball joint 5 at right-angles to said plane, and in that the first setting means (34) is a graduated, setting screw (34) acting directly on the ball (31) of the third attachment point (7) and in that the second setting means (37) is a second graduated setting screw (37) connected to the ball (31) of the third attachment point by means of a rigid member (35) universally pivotable at the adjusting screw (37) and at the ball (31).

2. Arrangement as claimed in claim 1, characterized in that the perpendicular distance from the axis of the direction indicator (1) to each of both pivoting axes (9, 10) of the base is less than the diameter of the direction indicator, resulting in a minor lateral displacement of the direction indicator axis, when the direction indication is set in the prescribed direction.

## Revendications

1. Dispositif de montage réglable d'un indicateur optique de direction tel qu'une lunette (1) de visée, avec une embase associée (4), sur une infrastructure (8) comportant trois points de fixation (5, 6, 7) réglables pour donner à l'indicateur de direction une direction prédéterminée par rapport à l'infrastructure, caractérisé en ce que

le premier point (5) de fixation comprend un élément à rotule (11) permettant un mouvement universel de l'embase (4) autour du point (5) de fixation, le deuxième point (6) de fixation comprend un élément à rotule (22) conçu pour effectuer un mouvement sur un arc dont le centre est situé au premier point (5) de fixation, l'arc étant situé approximativement dans un plan passant par les trois points de fixation (5, 6, 7),

le troisième point (7) de fixation comprend un élément à rotule (31) pouvant être déplacé par un premier moyen (34) de réglage, à peu près perpendiculairement au plan passant par les trois points de fixation (5, 6, 7) pour faire pivoter l'embase (4) et l'indicateur (1) de direction autour d'un axe (9) passant par les premier et deuxième points (5, 6) de fixation, et également par des seconds moyens (37) de réglage destinés à déplacer ledit moyen à rotule (31) sur un arc dont le centre est situé au premier point (5) de fixation, l'arc étant situé approximativement dans le plan passant par les trois points de fixation (5, 6, 7) afin de faire pivoter l'embase (4) et l'indicateur (1) de direction autour d'un axe (10) passant par le joint à rotule fixe (5), perpendiculairement audit plan, et en ce que les premiers moyens de réglage (34) sont gradués, une vis (34) de réglage agissant directement sur la rotule (31) du troisième point (7) de fixation, et en ce que les seconds moyens (37) de réglage comprennent une seconde vis graduée (37) de réglage reliée à la rotule (31) du troisième point de fixation au moyen d'un élément rigide (35) articulé de façon universelle sur la vis (37) de réglage et sur la rotule (31).

2. Dispositif selon la revendication 1, caractérisé en ce que la distance perpendiculaire de l'axe de l'indicateur (1) de direction à chacun des deux axes (9, 10) de pivotement de l'embase est inférieure au diamètre de l'indicateur de direction, ce qui a pour résultat un déplacement latéral minime de l'axe de l'indicateur de direction lorsque ce dernier est réglé dans la direction prédéterminée.

## Patentansprüche

1. Anordnung zum verstellbaren Befestigen eines optischen Anzeigers, wie ein Zielfernrohr (1), mit einer zugehörigen Basis (4) auf einem Unterbau (8), der mit drei Befestigungspunkten (5, 6, 7) versehen ist, die zur Vorgabe einer vorgegebenen Richtung in Bezug auf den Unterbau für den Richtungsanzeiger einstellbar sind, dadurch gekennzeichnet, daß der erste Befestigungspunkt (5) eine Kugeleinrichtung (11) aufweist, die eine universelle Bewegung der Basis (4) um den Befestigungspunkt (5) erlaubt, daß der zweite Befestigungspunkt (6) eine Kugeleinrichtung (22) aufweist, die eine Bewegung in einem Bogen gestattet, dessen Zentrum im ersten Befestigungspunkt (5) liegt, wobei der Bogen näherungsweise in einer Ebene durch die drei Befestigungspunkte (5, 6, 7) liegt, daß der dritte Befestigungspunkt (7) eine Kugeleinrichtung (31) aufweist, die durch eine erste Einstelleinrichtung (34) im wesentlichen um rechte Winkel zur Ebene durch die drei Befestigungspunkte (5, 6, 7) versetzbar ist, um die Basis (4) und den Richtungsanzeiger (1) um eine Achse (9) durch den ersten und zweiten Befestigungspunkt (5, 6) zu schwenken und ebenso durch eine zweite Einstelleinrichtung (37) zum Verstellen der Kugeleinrichtung (31) in einem Bogen mit seinem Zentrum im ersten Befestigungspunkt (5), wobei der Bogen näherungsweise in der Ebene durch die drei Befestigungspunkte (5, 6, 7) liegt, um die Basis (4) und den Richtungsanzeiger (1) um eine Achse (10) durch das feste Kugelgelenk (5) in rechten Winkeln zu dieser Ebene zu verschwenken und daß die erste Einstelleinrichtung (34) eine abgestufte Einstellschraube (34) ist, die direkt auf die Kugeln (31) des dritten Befestigungspunktes (7) wirkt und daß die zweite Einstelleinrichtung (37) eine zweite abgestufte Einstellschraube (37) ist, die mit der Kugel (31) des dritten Befestigungspunktes durch ein festes Glied (35) verbunden ist, das an der Einstellschraube (37) und an der Kugel (31) universell drehbar bzw. schwenkbar ist.

2. Einrichtung nach Anspruch 1, dadurch gekennzeichnet, daß der senkrechte Abstand von der Achse des Richtungsanzeigers (1) zu jedem der beiden Dreh- bzw. Schwenkachsen (9, 10) der Basis geringer ist, als der Durchmesser des Richtungsanzeigers, woraus eine geringere seitliche Verstellung der Richtungsanzeigerachse resultiert, wenn der Richtungsanzeiger in die vorgegebene Richtung eingestellt wird.

**Fig. 1**

*Fig. 2*

*Fig. 3*

*Fig. 4*

2